# EUROPÄISCHE PATENTSCHRIFT

(11) **EP 1 129 620 B1**
(45) Veröffentlichungstag und Bekanntmachung des Hinweises auf die Patenterteilung: **26.05.2004**
(21) Anmeldenummer: 01103550.8
(22) Anmeldetag: 19.02.2001
(51) Int. Cl.: A01N 25/10, C08J 3/22, C08K 5/00, C08L 91/02, C08L 63/08

(54) **Biozid-Batche auf Basis vernetzter nativer Öle, Verfahren zu ihrer Herstellung und ihre Verwendung in thermoplastischen Formmassen**
Biocide batches based on crosslinked native oils, process for their preparation and their use in thermoplastic moulding materials
Lots de biocides à base d'huiles natives réticulées, procédé pour leur préparation et leur utilisation dans des matériaux thermoplastiques moulés

(30) Priorität: 02.03.2000 DE 10010072
(43) Veröffentlichungstag der Anmeldung: 05.09.2001
(73) Patentinhaber: Rhein Chemie Rheinau GmbH, 68219 Mannheim (DE)
(72) Erfinder: Tebbe, Heiko, Dr., 68775 Ketsch (DE); Müller, Helmut, 97318 Kitzingen (DE); Müller, Volker, 76661 Philippsburg (DE)
(74) Vertreter: Feldhues, Michael L.F., Dr.

(56) Entgegenhaltungen:
- EP-A- 0 049 367
- EP-A- 0 121 699
- EP-A- 0 197 631
- EP-A- 0 408 888
- WO-A-93/23468
- US-A- 4 624 679
- US-A- 5 624 988

## Beschreibung

Gegenstand der Erfindung sind Biozid-Batche auf Basis vemetzter nativer Öle, Verfahren zu ihrer Herstellung und ihre Verwendung in thermoplastischen Formmassen.

Die Einarbeitung von Bioziden in thermoplastischen Formmassen zum Schutz vor Insekten, Bakterien-und-Pilzbefall ist allgemein bekannt, wie z.B. im "Taschenbuch der Kunststoff-Additive", Herausgeber R.Gächter und H.Müller, Carl Hanser Verlag, München, 2. Auflage (1979), Seite 453-469 beschrieben. Durch die Einarbeitung der Biozide in thermoplastische Formmassen werden die daraus hergestellten Formartikel gegen den Befall von Insekten, Pilzen, Bakterien und anderen Mikroorganismen geschützt und somit ein vorzeitiges Versagen der Formartikel in ihren Anwendungen verhindert. Hierbei besteht die Wirkungsweise der Biozide darin, den Stoffwechsel der Mikroorganismen durch Blockierung einer oder mehrerer Enzymsysteme zu stören. Um eine effektive Wirkung der Biozide in den thermoplastischen Formmassen erzielen zu können, müssen diese kompatibel mit der thermoplastischen Formmasse sein und gleichmäßig in ihr dispergiert sein. Um seine biologische Aktivität voll entfalten zu können, muss das Biozid in Kontakt mit den Mikroorganismen gelangen. Dazu muss es an die Oberflächen, einschließlich der inneren Porenoberfläche, der thermoplastischen Formmasse migrieren. Diese Migration verläuft in einigen Fälle langsam durch die amorphen Bereiche der thermoplastischen Formmassen und in anderen Fällen migriert das Biozid gemeinsam mit Weichmachern, die der thermoplastischen Formmasse zugesetzt werden, an die Oberfläche. An der Oberfläche entfalten die Biozide ihre Wirkung ohne Gefahr für Menschen und Tiere, da sie trotz hoher Toxizität nur in geringen Konzentrationen im Endprodukt vorhanden sind.

Biozide können in den verschiedensten Formen anfallen: pulvrig, kristallin, flüssig oder hochviskos. Für eine Anwendung in thermoplastischen Formmassen können allerdings nur Formen eingesetzt werden, die schnell und gleichmäßig in der thermoplastischen Formmasse zu verteilen sind.

Gemahlene Biozid-Pulver oder fein kristalline Biozide können zwar in thermoplastische Formmassen gut dispergiert werden, aber die Handhabung, der in der Regel toxischen Substanzen, stellt eine Gefahr für den Verarbeiter und die Umwelt dar. Weiterhin besteht beim Umgang mit feinen Pulvern immer die Gefahr der Staubexplosion.

US-Patent (Reissue) 29,409 beschreibt ein Verfahren zur Verminderung der Handhabungsgefahren, durch das Lösen der Biozide in flüssigen Lösungsmitteln. Hierbei wird zwar die Handhabung der Pulver vermieden, gleichzeitig müssen aber leichtentzündliche oder giftige Lösungsmittel gehandhabt werden. Weiterhin ist die Verarbeitung von wirkstoffhaltigen Lösungen in thermoplastischen Formmassen aufgrund der Verarbeitungstechnik bei hohen Temperaturen nur mit extrem hohem technischen Aufwand realisierbar.

Das US-Patent 4,086,297 beschreibt die Einarbeitung von Bioziden in feste Träger zu Biozid-Masterbatchen. Als feste Träger können verschiedene thermoplastische Formmassen dienen. Durch dieses Verfahren wird die Handhabung von feinen Pulvern und die damit verbundenen Gefahren vermieden. Die Biozid-Masterbatche werden hauptsächlich als kleine Granulate angeboten, die frei fließend sind und in denen das Biozid immobilisiert ist, so dass die Granulen kein Risiko, auch bei Hautkontakt, für die Umwelt darstellen. Trotz der Immobilisierung der Biozide im Masterbatch entfalten die Biozide nach der Einarbeitung in die thermoplastischen Formmassen noch ihre anti-mikrobielle Wirkung.

Für die praktische Anwendung der Biozid-Masterbatche müssen die Biozide dort um ein 20 faches bis 200 faches höher dosiert sein als in dem später damit ausgerüsteten Polymermaterial. Aus praktischen Gründen darf die Konzentration an Bioziden nicht zu gering sein, da sonst zu viel vorverarbeitetes Trägermaterial in die spätere Anwendung gelangen würde. Die Konzentration an Bioziden darf aber auch nicht zu hoch sein, da es sonst bei der späteren Endanwendung nur schwer zu dosieren und zu verteilen ist. Somit ergibt sich ein Konzentrationsfenster für die Biozid-Masterbatche von der 20 bis 200 facher Menge der in der Endanwendung benötigten Konzentration. Dieser Konzentrationsbereich kann bei der Einarbeitung von Bioziden in thermoplastische Trägermaterialien analog dem oben genannten US-Patent nur eingeschränkt eingehalten werden, so dass die daraus resultierenden Nachteile in der Endanwendung hingenommen werden müssen.

Weiterhin müssen die Biozide in die thermoplastischen Trägermaterialien bei höheren Temperaturen eingearbeitet werden. Diese hohe Temperaturbelastung muss zweimal durchgeführt werden. Einmal bei der Herstellung des Masterbatches und zum zweitenmal bei der Einarbeitung des Biozid-Masterbatches in das damit auszurüstende Polymer. Dieser durch den hohen Schmelzbereich der Thermoplaste bedingte Herstell-und Verarbeitungsprozess kann zur thermischen Zerstörung der Biozide führen, was zu einer nicht kontrollierbaren Verringerung der Wirkstoffkonzentration führen kann. Gleichzeitig stellt die resultierende Abspaltung von flüchtigen, giftigen Zersetzungsprodukten für die Umgebung eine Gefahr dar.

Somit stellte sich die Aufgabe nach einer Applikationsform für Biozide in thermoplastischen Formmassen zu suchen, die keine gesundheitsschädliche Stäube oder Gase bei der Verarbeitung freisetzt, verträglich mit der thermoplastischen Formmasse ist, einen hohen Füllgrad aufweist, rieselfähig ist und durch den Herstellungsprozess das Biozid nicht thermisch schädigt.

Gegenstand der Erfindung sind Biozid-Batche, die dadurch gekennzeichnet sind, dass sie aus einer Mischung von
a) 10 bis 99,9, bevorzugtvon 50 bis 90 Gew.-% Faktis und/oder epoxidierten und anschließend vernetzten Estern aus mindestens zweiwertigen Alkoholen und ungesättigten Fettsäuren oder vernetzten nativen Ölen
   und
b) 0,1 bis 90, bevorzugt von 10 bis 50 Gew.-% üblicher Biozide
bestehen.

Faktisse sind farblose oder farbige Stoffe, die durch Vernetzung von nativen Ölen z.B. durch das Einwirken von Schwefelchlorid oder Schwefel auf fette Öle (wie Rüböl, Trane) entstehen. Eine weitere Herstellmöglichkeit ist die Vernetzung von Hydroxylgruppen-haltigen Ölen, wie z.B. Rizinusöl, mittels mehrfunktionellen Isocyanaten, z.B. 2,6-Toluoldiisocyanat, zu sogenannten Polyurethan-Faktissen. Bevorzugt sind: Braunfaktisse auf Basis Rüböl und Schwefel, sowie PU-Faktisse auf Basis Rizinusöl und 4,4'-Diisocyanatodiphenylmethan.

Epoxidierte und anschließend vernetzte Ester aus mindestens zweiwertigen Alkoholen und ungesättigten Fettsäuren, insbesondere der Glyceriden solcher Fettsäuren im Sinne der Erfindung sind in EP-A 121 699 beschrieben.

Sie können erhalten werden, indem man entsprechende Ester zunächst epoxidiert und anschließend mittels geeigneter, mit Epoxy-Gruppen reagierenden mehrfunktionellen Vernetzungsmitteln, wie Polycarbonsäuren, Polyaminen, Polyhydroxyverbindungen oder Polythiolverbindungen, vernetzt. Geeignete Di- oder Polycarbonsäuren sind z.B. Bernstein-, Phthalsäure-Tere- und Isophthalsäure und Trimellithsäure. Geeignete Polyamine sind z.B. Ethylendiamin, Diethylentriamin, Hexamethylendiamin und Phenylendiamin. Geeignete Polyhydroxyverbindungen sind z.B. Glycerin, Glykol, Diglykol, Pentaeerythrit, Trimethylolpropan, Hydrochinon, Pyrogallol, und mit Polyalkoholen veresterte Hydroxycarbonsäuren. Geeignete Polythiolverbindungen sind z.B. Ethanthiol-1,2, Trimethylolpropan-tri-3-mercaptopropionat, Pentaerythrittetra-3-mercaptoropionat und Dithiophosphorsäuren. Geeignete Vernetzungsmittel können auch verschiedene funktionelle Gruppen in einem Molekül enthalten, wie 2-Aminoethanol oder 6-Aminohexansäure.

Geeignete, mindestens zweiwertige, vorzugsweise dreiwertige Alkohole sind z.B. Glycerin, Glykol, Pentaerythrit, Trimethylolpropan und/oder Sorbit. Bevorzugte Ester sind die natürlichen Triglyceride ungesättigter Fettsäuren, die sogenannten fetten Öle, beispielsweise Rüböl, Leinöl, Sojaöl und Fischöl.

Die Vernetzungsmittel werden mit den epoxidierten fetten Ölen, die Epoxidgehalte von 1,5 bis 15 Gew.-% (Gew-% Sauerstoff bezogen auf epoxidiertes fettes Öl), vorzugsweise 4 bis 8 Gew.-% aufweisen, in Dosierungen von 3 bis 50 Gew.-% bei Temperaturen von 80 bis 180°C, vorzugsweise bei 100 bis 150°C, zur Reaktion gebracht, wobei feste und halbfeste Polymere erhalten werden.

Die Dosierung der Vemetzungsmittel wird so bemessen, dass auf eine Epoxy-Gruppe etwa eine vernetzungsfähige Gruppe des Vernetzungsmittels kommt. Bei nicht vollständiger stöchiometrischer Umsetzung soll das Vemetzungsprodukt vorzugsweise noch Epoxid-Gruppen enthalten. Bevorzugt werden als Komponente a) dreidimensional vernetzte epoxidierte Sojaöle eingesetzt.

Unter handelsübliche Biozide versteht man Fungizide, Mikrobiozide, Insektizide, Termitizide und Algizide. Fungizide oder Mikrobiozide die in der erfindungsgemäßen Mischung verwendet werden können sind z.B. 10,10'-Oxy-bis-phenoxyarsin (OBPA), N-(Trifluormethylthio)-phthalimid, N-(Trichlormethylthio)-phthalimid, N-Dichlorfluormethylthiophthalimid, Diphenylantimon-2-ethylhexanoat, Kupfer-8-hydroxychinolin, 2-Methoxycarbonylamino-benzimidazol, 3-Iod-2-propinylbutylcarbamat, 2-Iod-2-propinylbutylcarbamat, Tributylzinnoxid und deren Derivate, 1,2-Benzisothiazolien-3-on, 2-n-Octyl-4-isothiazolin-3-on, N-Butyl-1,2-benzisothiazolin-3-on, und 4,5-Dichlor-2-n-octyl-isothazolin-3-on.

Geeignete Termitizide sind Verbindungen aus der Gruppe der Pyrethroide z.B. Cyclopropancarboxylsäure-,3-(2,2-dichloroethenyl)-2,2-dimethyl-,cyano-(4-fluoro-3-phenoxyphenyl)-methylester.

Bevorzugt werden als Biozide eingesetzt: 10,10'-Oxy-bis-phenoxyarsin, N-Butyl-1,2-benzisothiazolin-3-on, N-Dichlorfluormethylthiophthalimid und 2-Methoxycarbonylamino-benzimidazol.

Die anti-mikrobielle Wirkung der aufgeführten Biozide in thermoplastischen Formmassen ist bekannt und wird z.B. in "Taschenbuch der Kunststoff-Additive", Herausgeber R.Gächter und H.Müller, Carl Hanser Verlag, München, 2. Auflage (1979), Seite 453-469 beschrieben.

Die Biozid können einzeln oder als Mischung in dem erfindungsgemäßen Biozid-Batch enthalten sein.

Die erfindungsgemäßen Biozid-Batche können auf verschiedenen in der Verfahrenstechnik üblichen Aggregaten bei geringer Temperaturbelastung hergestellt werden. Geeignet sind z.B. Rührkessel, Extruder, Innenmischer, Schnellmischer, Kneter mit und ohne Stempel und Mischwalzen.

Das polymere Bindematerial wird im Mischaggregat vorgelegt. Der Mischer wird eingeschaltet und das Bindematerial kurz aufgeschlossen. Anschließend werden die Biozide oder Biozidgemische in Teilmengen dem Binder zugegeben. Die Biozide können hierbei in fester oder flüssiger Form dosiert werden. Wenn nötig, können feste oder hoch viskose Biozide durch vorheriges Tempern verflüssigt werden bzw. die Viskosität gesenkt werden. Nach wenigen Minuten liegt ein homogenes Gemisch vor, das nicht mehr staubt und rieselfähig ist.

Durch die geringen Verarbeitungstemperaturen im Bereich von 20 bis 100°C, bevorzugt 30 bis 60°C, kommt es bei der Herstellung des Biozid-Batches zu keiner thermischen Schädigung des Wirkstoffes und somit zu keinem Verlust an Wirkstoff und zu keinen toxischen Spaltprodukten.

Die erfindungsgemäßen Biozid-Batche werden gegen den mikrobiellen Abbau von thermoplastischen Formmassen verwendet. Dazu werden die erfindungsgemäßen Biozid-Batche mittels der in der Kunstoff-Verarbeitung üblichen Aggregate, z.B. Extruder, Kneter, Walzen und Kalander in die thermoplastischen Formmassen, umfassend Polyolefine, Polyether, Polyester, Polyamide, Polyurethan und Polyvinylchlorid (PVC), eingearbeitet. Besonders geeignet sind die erfindungsgemäßen Biozid-Batche zur Stabilisierung von PVC und Thermoplastischen Polyurethanen (TPU). Die Zugabemenge an erfindungsgemäßen Biozid-Batchen richtet sich nach der eingestellten Wirkstoffkonzentration im Biozid-Batch und liegt bei 0,05 bis 5 Gew.-%, bevorzugt 0,1 bis 1 Gew.-%, bezogen auf den reinen Wirkstoff im Fertigprodukt.

### Beispiele

### Hergestellte Mischungen:

| | | |
|---|---|---|
| 1. | Epoxidierter vernetzter Ester¹ | 40 Gew.-Teile |
| | N-Butyl-1,2-benzisothiazolin-3-on | 60 Gew.-Teile |
| | Epoxidierter vernetzter Ester¹ | 90 Gew.-Teile |
| | N-Dichlorfluormethylthiophthalimid | 5 Gew.-Teile |
| | 2-Methoxycarbonylamino-benzimidazol | 5 Gew.-Teile |
| 3. | PU-Faktis² | 50 Gew.-Teile |
| | N-Dichlorfluormethylthiophthalimid | 50 Gew.-Teile |
| 4. | PU-Faktis² | 90 Gew.-Teile |
| | 10,10'-Oxy-bis-phenoxyarsin | 10 Gew.-Teile |
| 5. | Braunfaktis³ | 80 Gew.-Teile |
| | Cyclopropancarboxylsäure-,3 (2,2-dichloroethenyl)-2,2-dimethyl-,cyano-(4-fluoro-3-phenoxyphenyl)-methylester. | 20 Gew.-Teile |

| | | |
|---|---|---|
| ¹⁾ Bei dem Binder handelt es sich um ein mit Dicarbonsäuren dreidimensional vernetztes epoxidiertes Sojaöl, analog EP-A 121 699 hergestellt. | | |
| ²⁾ Bei dem Binder handelt es sich um ein mit Diisocyanat dreidimensional vernetztes Rizinusöl | | |
| ³⁾ Bei dem Binder handelt es sich um ein mit Schwefel dreidimensional vernetztes Rüböl. | | |

### Fertigungsbeispiele:

In einem Kneter, der auf 50°C temperiert ist, wird das Bindersystem bestehend aus dem epoxidierten vernetzten Ester vorgelegt. Dazu wir nun portionsweise die unter Ausführungsbeispiel 1 angegebene Menge an Biozid zugegeben. Nach der Zugabe wird noch weitere 3 min nachgemischt und anschließend die Mischung ausgeworfen. Man erhält eine nicht staubende, nicht klebende rieselfähige gelbbraune Mischung.

### Anwendungsbeispiel:

Die Prüfungen erfolgten in Anlehnung an die Schweizer Prüfnorm SNV 195 921 (gegen kunststoffzerstörende und kunststoffverfärbende Schimmelpilze).

Aus den Mustern wurden runde Prüfkörper mit einem Durchmesser von 3 cm angefertigt. Die Prüfkörper werden von beiden Seiten auf Agar aufgelegt. Der Nährboden besteht aus einer unteren, keimfreien und einer oberen beimpften Agarschicht (je 10 ml). Die Lagertemperatur betrug 26°C bei einer Inkubationszeit von 4 Wochen für den Schimmel. Im Anschluss wurde der Test visuell ausgewertet. Das Ausmaß des Bewuchses der Prüfkörper durch Mikroorganismen sowie die Größe der bewuchsfreien Zone um den Prüfkörper sind hierbei ein Maß für die mikrobiologische Wirksamkeit.

Es wurden folgende Prüfkeime verwendet:
Penicillium brevicaule
Aspergillus niger
Clasdosporium herbarum
Aspergillus terreus Thom
Chaetomium globosum
Trichoderma viride
Steptoverticillium reticulum

Die Prüfkörper werden nach folgendem Schema bewertet:

| Hemmzone [mm] | Bewuchs | Beschreibung | Bewertung |
|---|---|---|---|
| 1 bis n | kein | mehr als I mm Hemmzone, kein Bewuchs auf Prüfkörper | gute Wirkung |
| 0 bis 1 | kein | bis 1 mm Hemmzone, kein Bewuchs auf Prüfkörper | gute Wirkung |
| 0 | kein | keine Hemmzone, kein Bewuchs auf Prüfkörper | gute Wirkung |
| 0/- | schwach | keine Hemmzone, schwacher Bewuchs auf Prüfkörper | Wirkungsgrenze |
| 0/-- | voll | keine Hemmzone, starker Bewuchs auf Prüfkörper | ungenügende Wirkung |

### Beispiel 1

In einem herkömmlichen Einschneckenextruder wird thermoplastisches Polyurethan (Polyester-TPU mit einer Dichte von 1,2 g/cm³ und einer Shore-A-Härte von 85) bei einer Massetemperatur von 210°C mit verschiedenen Biozid-Batchen compoundiert (siehe Tabelle 1). Anschließend werden aus diesen Compounds mittels einer kommerziellen Spritzgussmaschine Norm-Farbmusterplättchen mit Abmessungen von 60 x 40 x 2 mm (Länge x Breite x Tiefe) gespritzt, aus denen die Prüfkörper hergestellt werden.

**Tabelle 1**

| Übersicht über eingesetzte Versuchsmischungen | | | | | |
|---|---|---|---|---|---|
| | Beispiel 1a | Beispiel 1b | Vergleichsbeispiel 1c | Vergleichsbeispiel 1d | Vergleichsbeispiel 1e |
| Teile TPU [Gew.-%] | 99,2 | 99 | 100 | 90 | 99 |
| Teile Biozid-Batch [Gew.-%] | 0,8 Mischung 1 | 1 Mischung 3 | - | 10 | 1 |
| Träger Biozid-Batch | Vernetzter Ester 40 % | PU-Faktis 50 % | - | Polystyrol 95 % | TPU 50 % |
| Biozid im Biozid-Batch | N-Butyl-1,2-benzisothiazolin-3-on 60% | N-Dichlorfluormethylthiophthalimid 50% | - | 10,10'-Oxybisphenoxyarsin 5% | N-Dichlorfluormethylthiophthalimid 50% |
| Gesamtteile Biozid [Gew.-%] | 0,48 | 0,5 | 0 | 0,5 | 0,5 |

In Tabelle 2 sind die Ergebnisse des Agardiffusionstestes aufgelistet.

**Tabelle 2**

| Versuchsergebnisse | | | | | |
|---|---|---|---|---|---|
| | Beispiel 1a | Beispiel 1b | Vergleichsbeispiel 1c | Vergleichsbeispiel 1d | Vergleichsbeispiel 1e |
| Penicillium brevicaule | 1-2 | 0 | 0 / - | 0-1 | 0-1 |
| Aspergillus niger | 1-2 | 0 | 0 / - | 0-1 | 0 |
| Clasdosporium herbarum | 2-5 | 2-4 | 0-1 | 1-3 | 3-4 |
| Aspergillus terreus Thom | 3-5 | 4 | 0 / - | 1-3 | 4-6 |
| Chaetomium globosum | 2-4 | 2-3 | 0 / - | 1-5 | 0-2 |
| Trichoderma viride | 0 | 0 | 0 / -- | 0 / - | 0 / - |
| Steptoverticillium reticulum | 5-7 | 4 | 0 / - | 1-2 | 3 |

### Beispiel 2

In einem in der PVC-Industrie üblichen Mischaggregat werden übliche PVC-P-Kalanderformulierungen (PVC-Pulver 100 Teile, Düsononylphthlat 58 Teile, Kalciumcarbonat 10 Teile, Titandioxid 5 Teile und Ba/Zn-Stabilisatoren 2 Teile) mit und ohne Bioziden hergestellt (siehe Tabelle 3). Aus diesen Mischungen werden mittels kommerzieller Kalander Weich-PVC-Folien mit einer Dicke von 2 mm hergestellt, aus denen dann die Prüfkörper gewonnen werden.

**Tabelle 3**

| Übersicht über eingesetzte Versuchsmischungen | | | | | |
|---|---|---|---|---|---|
| | Beispiel 2a | Beispiel 2b | Vergleichsbeispiel 2c | Vergleichsbeispiel 2d | Vergleichsbeispiel 2e |
| Teile PVC-P [Gew,-%] | 99 | 99,5 | 100 | 99 | 99,9 |
| Teile Biozid-Batch [Gew.-%] | 0,5 Mischung 2 | 0,5 Mischung 4 | - | 1 | 0,1 |
| Träger Biozid-Batch | Vernetzter Ester 90 % | PU-Faktis 90 % | - | Diisodecylphthlat 95 % | EVA 40 % |
| Biozid im Biozid-Batch | N-Dichlorfluormethylthiophthalimid /2-Methoxycarbonylaminobenzimidazol 5 % / 5 % | 10,10'-Oxybisphenoxyarsin 10 % | - | 10,10'-Oxybisphenoxyarsin 5 % | N-Dichlorfluormethylthiophthalimid 60 % |
| Gesamtteile Biozid [Gew.-%] | 0,05 | 0,05 | 0 | 0,05 | 0,06 |

In Tabelle 4 sind die Ergebnisse des Agardiffusionstestes aufgelistet.

**Tabelle 4**

| Versuchsergebnisse | | | | | |
|---|---|---|---|---|---|
| | Beispiel 2a | Beispiel 2b | Vergleichsbeispiel 2c | Vergleichsbeispiel 2d | Vergleichsbeispiel 2e |
| Penicillium brevicaule | 0-1 | 1-2 | 0 / -- | 1-2 | 0 |
| Aspergillus niger | 0-1 | 1-3 | 0 / -- | 2-4 | 0 |
| Clasdosporium herbarum | 4-6 | 2-4 | 0 / -- | 2-3 | 3-6 |
| Aspergillus terreus Thom | 3-4 | 3-4 | 0 / -- | 2-4 | 3-5 |
| Chaetomium globosum | 5-6 | 4-5 | 0 / -- | 3-5 | 4-6 |
| Trichoderma viride | 0 | 0-1 | 0 / --- | 0 | 0/- |
| Steptoverticillium reticulum | 4-5 | 4-5 | 0 / - | 4-6 | 3-5 |

Die beiden Anwendungsbeispiele verdeutlichen, dass die erfindungsgemäßen Biozid-Batche bessere oder genauso gute anti-mikrobielle Wirkungen zeigen, wie bekannte Biozid-Batche.

## Patentansprüche

1. Biozid-Batche, **dadurch gekennzeichnet, dass** sie aus einer Mischung von
a) 10 bis 99,9 Gew.-% Faktis und/oder epoxidierten und anschließend vernetzten Estern aus mindestens zweiwertigen Alkoholen und ungesättigten Fettsäuren oder vernetzten nativen Ölen
und
b) 0,1 bis 90 Gew.-% üblicher Biozide
bestehen.

2. Biozid-Batche nach Anspruch 1, **dadurch gekennzeichnet, dass** als Komponente a) dreidimensional vernetzte epoxidierte Sojaöle eingesetzt werden.

3. Herstellung der Biozid-Batche nach Anspruch 1 und 2, **dadurch gekennzeichnet, dass** die Komponenten a) und b) in Mischaggregaten bei Temperaturen von 20° bis 100°C gemischt werden.

4. Verwendung der Biozid-Batche nach Anspruch 1 als Stabilisator gegen den Abbau von thermoplastischen Formmassen durch Insekten, Termiten, Pilzen, Mikroben und Bakterien.

5. Verwendung der Biozid-Batche nach Anspruch 1 als Stabilisator gegen den Abbau von Polyvinylchlorid durch Insekten, Termiten, Pilzen, Mikroben und Bakterien.

6. Verwendung der Biozid-Batche nach Anspruch 1 als Stabilisator gegen den Abbau von thermoplastischem Polyurethan durch Insekten, Termiten, Pilzen, Mikroben und Bakterien.

## Claims

1. Biocide batches, **characterized in that** they consist of a mixture of
a) 10 to 99.9 wt.% of factice and/or epoxidized and subsequently cross-linked esters of at least dihydric alcohols and unsaturated fatty acids or cross-linked native oils
and
b) 0.1 to 90 wt.% of conventional biocides.

2. Biocide batches according to Claim 1, **characterized in that** three-dimensionally cross-linked epoxidized soya oils are used as component a).

3. Production of the biocide batches according to Claim 1 and 2, **characterized in that** the components a) and b) are mixed in mixing assemblies at temperatures of 20° to 100°C.

4. Use of the biocide batches according to Claim 1 as a stabilizer against the degradation of thermoplastic moulding compositions by insects, termites, fungi, microbes and bacteria.

5. Use of the biocide batches according to Claim 1 as a stabilizer against the degradation of polyvinyl chloride by insects, termites, fungi, microbes and bacteria.

6. Use of the biocide batches according to Claim 1 as a stabilizer against the degradation of thermoplastic polyurethane by insects, termites, fungi, microbes and bacteria.

## Revendications

1. Lots de biocides, **caractérisés en ce qu'**ils sont constitués d'un mélange de:
a) 10 à 99,9 et de préférence de 50 à 90 % en poids de factices et/ou d'esters époxydés et ensuite réticulés d'alcools au moins bifonctionnels et d'acides gras insaturés ou d'huiles natives réticulées et de
b) 0,1 à 90, de préférence de 10 à 10 % en poids de biocides habituels.

2. Lots de biocides selon la revendication 1, **caractérisés en ce que** l'on utilise comme composant a) des huiles de soja époxydées et réticulées dans les trois dimensions.

3. Préparation des lots de biocides selon les revendications 1 et 2, **caractérisée en ce que** les composants a) et b) sont mélangés dans des machines de mélange à des températures comprises entre 20° et 100° C.

4. Utilisation des lots de biocides selon la revendication 1 comme agents de stabilisation vis-à-vis de la décomposition de pâtes thermoplastiques de moulage par des insectes, des termites, des champignons, des microbes et des bactéries.

5. Utilisation des lots de biocides selon la revendication 1 comme agents de stabilisation contre la décomposition du poly(chlorure de vinyle) par des insectes, des termites, des champignons, des microbes et des bactéries.

6. Utilisation des lots de biocides selon la revendication 1 comme agent de stabilisation contre la décomposition de polyuréthane thermoplastique par des insectes, des termites, des champignons, des microbes et des bactéries.
